(19) Europäisches Patentamt

European Patent Office

Office européen des brevets

(11) EP 0 751 666 A2

## (12) EUROPEAN PATENT APPLICATION

(43) Date of publication:
02.01.1997 Bulletin 1997/01

(51) Int. Cl.$^6$: H04N 1/047

(21) Application number: 96201731.5

(22) Date of filing: 21.06.1996

(84) Designated Contracting States:
BE DE FR GB

(30) Priority: 29.06.1995 US 496505

(71) Applicant: Bayer Corporation
Pittsburgh, PA 15219-2502 (US)

(72) Inventor: Duval, Christopher R.
Charlestown, MA 02129 (US)

(74) Representative: Ramon, Charles Lucien et al
Agfa-Gevaert N.V.
Dienst Intellectuele Eigendom 3800
Septestraat 27
2640 Mortsel (BE)

(54) Scanner encoder system

(57) A scanning apparatus (100) including a movable scan carriage (220) for scanning an original document (102) to obtain a digitized representation thereof. A CCD sensor array (234), disposed within the scan carriage, is used in conjunction with a linear encoder (2112) to determine the position of the scan carriage during scanning.

FIG. 21A

FIG. 21B

EP 0 751 666 A2

**Description**

The field of the present invention is optical scanning of high-resolution color images, and in particular, the use of a flat-bed scanner system for the scanning of reflective and transmissive original documents at high resolution in a high volume production environment typical in the graphic arts electronic prepress industry. The original documents scanned by such systems include color or monochrome photographs, artwork, and composed pages of text and graphics. The actual graphic image content of the scanned original document is referred to as an "original".

In use of a flat-bed scanner for reflective scanning, an original on an opaque substrate is placed with the surface containing the original facing down on a flat transparent reference surface, typically glass. The original document is fixed on the surface such that a single line of the original, herein after referred to as a "scan line" is illuminated from below, and the light reflected from the scan line is directed through an optical system to form an image of the scan line on a sensor such as a CCD array, which converts the optical signal to an electronic representation of the scan line, comprising a line of digital picture elements, or "pixels". The desired portion of the original is scanned, one scan line at a time, by moving the original relative to the illumination system, optical system, and sensor along a direction hereinafter referred to as the "scanning axis". In systems typical of the prior art, such as that disclosed in U.S. 5,341,225, the illumination system, optical system and sensor are configured to move together as a unit. In other systems, such as those of U.S. 5,140,443, the original is moved while the illumination system, optical system and sensor remain fixed. In a production environment, original documents are scanned in a sequence, with each requiring a preparation step in which the original to be scanned is located and fixed on the surface in proper alignment and registration, followed by the actual scanning operation.

A transparent original document, typically a photographic transparency, comprises an original on one side of a thin transparent substrate. In this case, the original is illuminated from the side opposite from that containing the optical system and sensor. Use of a single flat-bed scanner for both types of scanning involves a modal configuration change. Typically, a flipcover used in reflective scanning mode to hold the original document flat on the transparent surface is replaced by a transmissive illumination module which illuminates from above the portion of the original to be scanned. As in reflective-mode scanning, prior art systems are configured so that either the original or one or more scanner illumination, optics or sensor components move to carry out the scanning process.

In addition to reconfiguration of the illumination system, the magnification of the optical system is typically changed so that the same number of pixels imaged on the CCD array, and captured by the digitizing electronics, corresponds to a larger or smaller area of the original. In high-resolution scanning systems typically in use in graphic arts electronic prepress processing, transparencies are oftentimes scanned at resolutions of 4,000 pixels per inch (ppi) or greater, while reflective originals are usually scanned at much lower resolutions, for example 1,200 ppi. Accordingly, in a production environment in which both reflective and transmissive originals are to be scanned in a mixed processing sequence, mode changes involving illumination system and resolution settings can add significantly to the time required for job processing.

It is therefore a general object of the present invention to provide an apparatus for high-volume, high-resolution color scanning for both reflective and transmissive original documents.

It is a specific object of the invention to provide a scanning apparatus wherein reflective and transmissive original documents can be intermixed in processing order with minimum system reconfiguration.

It is a further specific object of the invention to minimize the time during which the scanning apparatus must await original document preparation and setup for the next scan.

It is a feature of the invention that transmissive original documents can be prepared for a next scanning operation without interrupting a scanning operation currently in process.

It is another feature of the invention that positioning a transmissive original document m the scanning apparatus automatically selects operational parameters for transmissive scanning, and its removal restores the operational parameters for reflective scanning.

It is still another feature of the invention to provide visual aids for the accurate positioning and alignment of a reflective original to be scanned to minimize the time required for original document setup in reflective mode.

The apparatus comprises a flat-bed scanner providing separate fixed object focal planes for transmissive and reflective originals, wherein a movable module, hereinafter referred to as a "scan carriage", containing illumination, sensor, and optical elements is moved to scan an original. The movable scan carriage has an illumination source disposed between the two object focal planes, with the object focal plane to be used (transmissive or reflective) selected by changing the position of one or more optical elements within the scan carriage. The magnification of the optical system, i.e., the resolution of the digital representation of the original, can be adjusted independently of the selection of an object focal plane.

The positioning of optical elements to select the object focal plane is the subject of several embodiments to be described in detail below. One or more mirrors can be moved so as to retain the total optical path length between the selected object focal plane and the sensor focal plane, i.e., the plane on which the original is imaged on the sensor. Resolution selection can occur through linear motion of a focusing lens or an element of a focusing lens, singly or in combination with the motion of one or more mirrors. In one embodiment, resolution selection is accomplished by rotating a focusing lens about an axis perpendicular to its optic axis.

The illumination system can be configured according to the object focal plane selected, using one or more elongated lamps disposed along axes substantially parallel to the scan line axis of an original at the selected object focal plane. In one embodiment, three tubular lamps are fixed in a removable lamp cartridge disposed in the movable scan carriage such that two of the three lamps are used with the upper (reflective) object focal plane, and the third for the lower (transmissive) object focal plane. In alternate embodiments, one or two lamps serve both reflective and transmissive modes with additional optical components used to direct light to the selected object focal plane.

The transmissive object focal plane is fixed with respect to the scanning apparatus, located between the illumination system and the other optical components. In one embodiment, a removable transparency holder is used for access to the transmissive object focal plane, and for accurate placement of an original document to be scanned before insertion into the scanner. In alternate embodiments, the action of insertion or removal of the transparency holder is used, through appropriate linkages with illumination system elements and/or optical elements, to select the transmissive or reflective focal planes respectively.

As a protection against dust and optical flare, the scan cartridge is effectively sealed, with only an essential linear aperture open during the scanning operation. In one embodiment, a dark slide is disposed such as to close this linear aperture when scanning is not taking place and when the system is being used for dark current calibration. In another embodiment, a plurality of dark slides are combined to produce an aperture shutter for maximum flare reduction in addition to dust protection.

The scan carriage is moved along a scanning axis from one end of the original to be scanned to the other, carrying the illumination, optics and sensor systems within it. Several drive system embodiments are described suitable for use in the apparatus of the invention. One embodiment employs a plurality of helically-wound bands disposed end-to-end as means for assuring a precise movement and position encoding. In an alternate embodiment, a motor drive system is used wherein the scan line axis of a scanned original passes through a center of rotation of the scanning module. Configurations using a stepper motor and D.C. motor with position encoder can be used for the drive system.

Finally, the movable scan carriage can include alignment aids visible at the reflective scanning surface, such that a user can accurately position an original to be scanned with respect to the scan line axis.

The use of separate object focal planes for reflective and transmissive scan modes provides the benefit over the prior art in not having to carry out mode change operations such as installation of a separate illumination unit for transmissive scan mode. Although use of two object focal planes is in itself not new in the art, the use of a single illumination system together with mode-selection linkages and other features, fixed within a self-contained moving scan carriage, is unknown in the art. Accordingly, the objects of the invention are met by the ability to change modes quickly, without extensive reconfiguration of components of the scanning apparatus. Transparencies can be prepared outside of the scanner while a current reflective or transmissive scan is in progress, and a transparency can be scanned without disturbing the reflective scanning surface. Additional efficiency and digital image quality are obtained from the fact that transparencies need not be mounted on a glass surface, or in a glass sandwich. The combined effect of these improvements over prior art scanning systems is enhanced productivity in an apparatus used for high-volume, high-resolution color scanning for reflective and transmissive originals intermixed in processing order.

The objects and features of the present invention will best be understood from a detailed description of a preferred embodiment thereof selected for the purposes of illustration and shown in the accompanying drawings, in which:

FIG. 1A and FIG. 1B show perspective views of a single object focal plane dual-mode flat-bed scanner, configured according to the prior art for reflective and transmissive original scanning, respectively.

FIG. 2A and FIG. 2B show in block diagram form a dual object focal plane scanning apparatus according to the present invention, providing reflective and transmissive scanning modes, respectively;

FIG. 3A and FIG. 3B illustrate the selection of object focal planes by motion of a single mirror in the moving scan carriage;

FIG. 4A and FIG. 4B illustrate the selection of object focal planes by motion of a mirror pair in the moving scan carriage;

FIG. 5A and FIG. 5B show an alternate embodiment with a single movable mirror for object focal plane selection;

FIG. 6A illustrates resolution selection by linear motion of a fixed focal-length lens;

FIG. 6B illustrates resolution selection by changing the focal length of a zoom lens;

FIG. 7A and FIG. 7B illustrate resolution selection by rotating a lens about an axis perpendicular to its optic axis;

**FIG. 7C** illustrates resolution selection by multiple rotations of a lens about an axis perpendicular to its optic axis;

**FIG. 8** shows an embodiment comprising an optical path folded in three dimensions;

**FIG. 9A** and **FIG. 9B** show a dual-mode scanner illumination configuration with a single lamp according to the invention;

**FIG. 10A** and **FIG. 10B** show illumination configurations employing a rotating lamp element;

**FIG. 11A** and **FIG. 11B** show two-lamp illumination configurations employing diffusers;

**FIG. 12A**, **FIG. 12B** and **FIG. 12C** show two-lamp illumination configurations employing removably-disposed diffusers, reflectors, or diffuser reflector combinations;

**FIG. 13A** and **FIG. 13B** show three-lamp illumination configurations;

**FIG. 14A** and **FIG. 14B** show top and side views of a removable lamp cartridge with three lamps;

**FIG. 15A**, **FIG. 15B** and **FIG. 15C** illustrate use of a removable transmissive original holder for selection of illumination mode;

**FIG. 16A**, **FIG. 16B** and **FIG. 16C** illustrate use of a removable transmissive original holder for positioning optical elements for selection of an object focal plane;

**FIG. 17A** and **FIG. 17B** illustrate the use of a dark slide for dust protection and dark current calibration;

**FIG. 18A**, **FIG. 18B** and **FIG. 18C** illustrate the use of an aperture shutter/dark slide combination for dust protection, dark current calibration, and reduction of the effects of flare within the moving carriage;

**FIG. 19A** and **FIG. 19B** show top and side views of a linear drive system for a scanner carriage, using helically-wound bands;

**FIG. 20A** and **FIG. 20B** show top and side views of a drive system wherein the scan line axis of an scanned original passes through a center of rotation of the scanning module;

**FIGS. 21A** and **21 B** illustrates an embodiment wherein position encoding utilizes elements of a CCD array; and,

**FIG. 22A** and **FIG. 22B** show top and side views of an alignment grid system for reflective originals according to the invention.

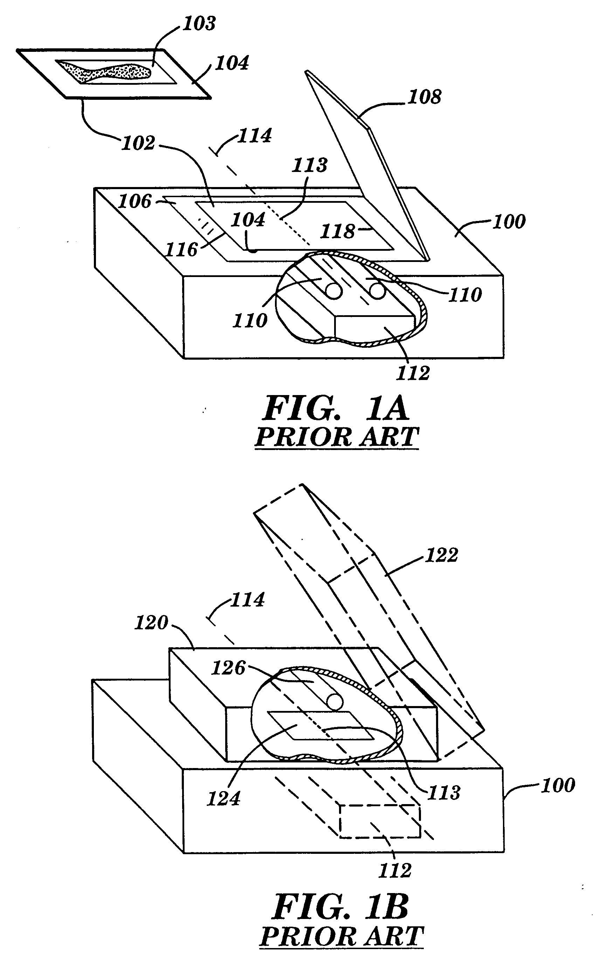

Turning now to the drawings, the various embodiments of the invention will be described with respect to the optical system, illumination system, linear drive system, and other components, wherein like reference numerals refer to like elements throughout the drawings. **FIG. 1A** and **FIG. 1B** show perspective views of a dual mode flat-bed scanner according to the prior art. In **FIG. 1A**, a scanner **100** is configured for the reflective scanning mode. An original document **102** is placed with the surface **104** containing the original **103** to be scanned facing down on a transparent surface **106**, and held in place by a flipcover **108**. The surface is illuminated from below by lamps **110**, producing a scan line **113** having a scan line axis **114**, wherein the lamps **110** are disposed substantially parallel to the scan line axis **114**. The scanning optics and sensor electronics are located in scan module **112**, which is driven together with lamps **110** such as to move the scan line **113** from one end **116** of the original document **102** to the other end **118** of original document **102**.

In **FIG. 1B**, the same scanner **100** is re-configured for the transmissive scanning mode. Flipcover **108** is replaced by a transmissive illumination module **120** which can be raised to position **122** for insertion or removal of a transparent original document **124** to be scanned. An illumination system, shown in the drawing as lamp **126**, is disposed so as to illuminate scan line **113** of the transparent original document **124** from above along scan line axis **114**, thereby allowing scanning of the illuminated transparent original document **124** by the scan module **112**.

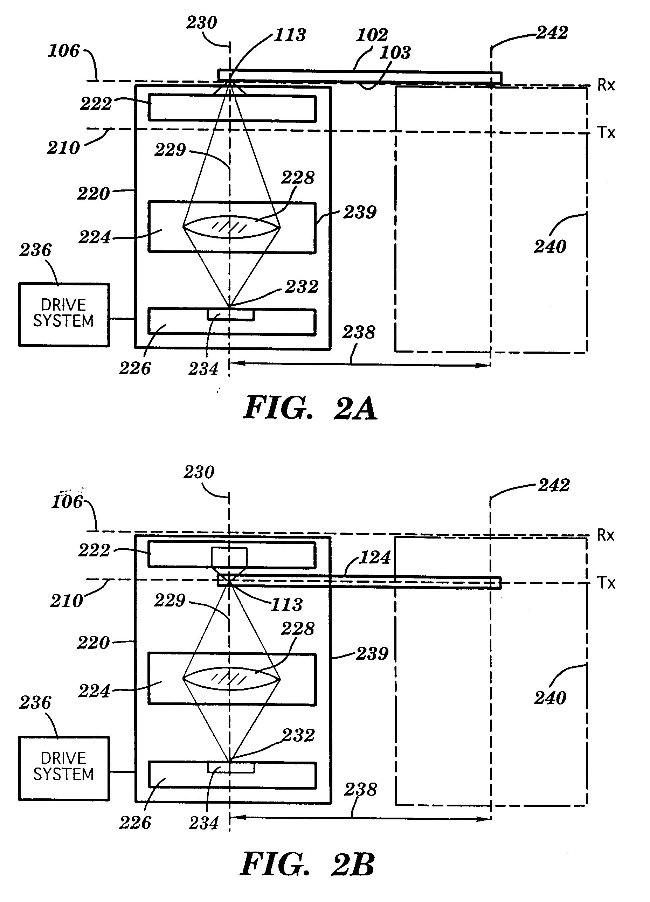

**FIG. 2A** and **FIG. 2B** show block diagram views of a dual mode flat-bed scanning apparatus according to the invention. In **FIG. 2A**, a reflective original document **102** is placed with the original **103** to be scanned on the surface **106**, hereinafter referred to as the "**Rx** object focal plane". A second object focal plane **210** is located below the **Rx** object focal plane **106** and hereinafter referred to as the "**Tx** object focal plane", to be described further below. The scan carriage **220** comprises illumination system **222**, optical system **224** and sensing system **226**. The illumination system **222** includes one or more lamps and other components (not shown), disposed so as to illuminate the original **103** along scan line **113**. Of course, as should be readily apparent, scan line **113** extends perpendicularly out of the page along scan axis **114** (not shown).

The optical system **224** includes one or more focusing elements, (assumed in this discussion to be a focusing lens **228**) possibly combined with other optical components to determine an optical path **229**, having optic axis **230**, from scan line **113** to sensor focal plane **232**. The sensing system **226** comprises a linear sensor array **234** together with electronics used for data acquisition and control (not shown). For the purposes of this discussion, it is assumed that the array 234 is a linear CCD array, but alternate sensor systems can be used as well.

A linear drive system 236 is used to move the scan carriage 220 and the components fixed within it along a scanning axis 238 from its starting position 239 to end of scan position 240, with optic axis 230 moved to position 242, thereby scanning the original 103, which remains fixed in a stationary position on the Rx object focal plane 106.

In FIG. 2B, the apparatus of FIG. 2A has been reconfigured for transparency scanning mode. A transparent original document 124 is placed with its emulsion surface in the Tx object focal plane 210. Illumination system 222 illuminates the scan line 113 in Tx object focal plane 210, and optical system 224 is changed such as to focus the scan line 113 at sensor focal plane 232. As in reflective scan mode, the original document 124 remains stationary as the scan carriage 220 is driven along scanning axis 238 by linear drive system 236 from beginning of scan to end of scan.

The optical system of the scan carriage 220 provides three functions: (1) selection of the object focal plane as described above; (2) determination of the magnification of the object projected upon the sensor focal plane 232; and, (3) folding of the optical path 229 for efficient use of the physical volume within the scan carriage 220. These functions will be considered in the discussion and drawings to follow.

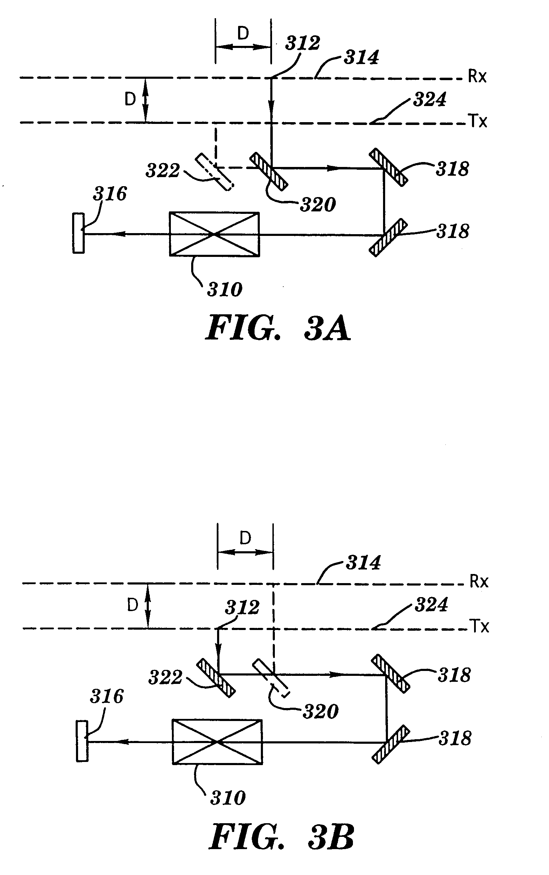

FIG. 3A and FIG. 3B illustrate the use of a single mirror for selection between the Rx and Tx object focal planes for reflective and transmissive originals, respectively. In FIG. 3A, a lens 310 focuses a scan line 312 in the Rx object focal plane 314 on a sensor array 316 using two fixed mirrors 318 and one movable mirror 320 to fold the optical path accordingly. In FIG. 3B, the mirror 320 has been moved a linear distance D to position 322, where the distance D is the separation distance between the Rx object focal plane 314 and the Tx object focal plane 324. The total optical path length from scan line 312 to sensor focal plane 316 therefore remains constant.

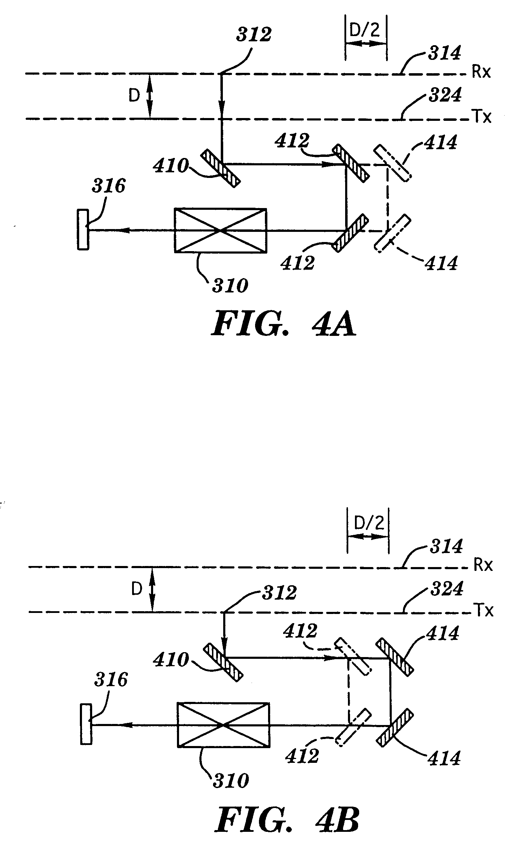

FIG. 4A and FIG. 4B illustrate the use of a movable pair of mirrors for selection between the Rx and Tx object focal planes. In FIG. 4A, fixed mirror 410 is used together with movable mirror pair 412 to select Rx object focal plane 314. In FIG. 4B, the movable mirror pair 412 has been moved a linear distance D/2 to position 414, where D is again the separation distance between Rx object focal plane 314 and Tx object focal plane 324.

In the configurations of FIG. 3A through FIG. 4B described above, a constant optical path between the selected object focal plane is folded substantially horizontally, using the vertically disposed fixed mirror pair 318 in FIG. 3A and vertically disposed movable mirror pair 412 in FIG. 4A. A consequence of these configurations is that the first mirror in each case (mirror 320 in FIG. 3A and mirror 410 in FIG. 4A) is close to the selected object focal plane, causing potential degradation of the digitized image as a result of dust settling on the mirror surface. This degradation is due to the fact that, for long focal length lenses typically used in scanning systems, dust particles close to the object focal plane can be partially focused at the sensor focal plane, and can therefore cause digitized image contamination for originals at the nearest object focal plane, i.e., at the Tx object focal plane 324. This can be seen from the fact that the peak-to-peak signal variation V along the sensor focal plane as a result of dust having a mean radius a on a surface located a distance d from the object focal plane is given by:

$$V = \frac{a^2}{d^2 \tan^2(\sin^{-1}(NA))} \times 100\% \qquad [1]$$

where NA is the working numerical aperture of the object space. As a rule of thumb, d should be great enough so that $V \leq \sim 20\%$ if uncorrectable degradation of the digitized image is to be avoided.

There exist variations on the configurations of FIG. 3A through FIG. 4B in which the first mirror is kept at maximum distance, for example by folding the beam over itself (interchanging the positions of mirror 320 and lens 310 in FIG. 3A). Such configurations usually require more physical volume, however, in order to avoid "collisions" between the optical components (e.g., between mirror 322 and lens 310 in FIG. 3B).

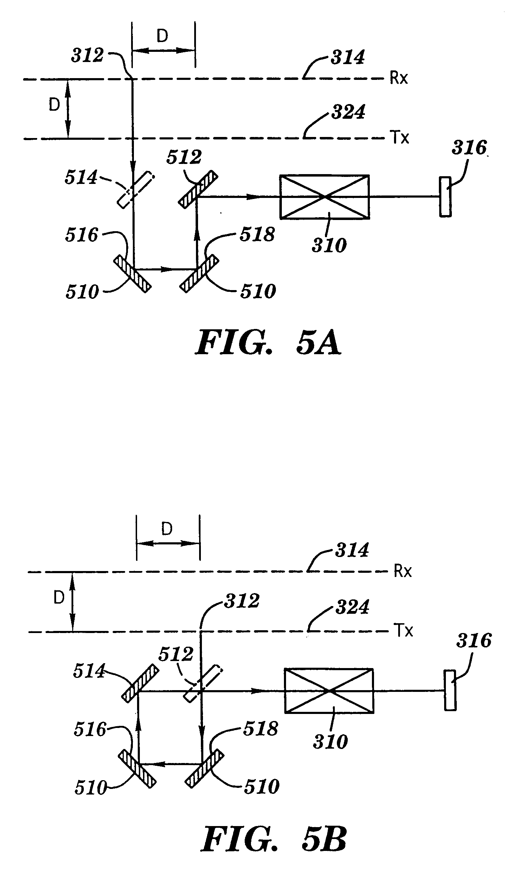

FIG. 5A and FIG. 5B show an embodiment wherein a single mirror is moved to select between alternate optical paths of the same total path length, using a fixed pair of mirrors disposed horizontally so as to fold the beam vertically. In FIG. 5A, the scan line 312 is focused by lens 310 on sensor array 316 using fixed mirror pair 510 and movable mirror 512. In FIG. 5B, the mirror 512 has been moved a linear distance D to position 514, where D is the separation distance between the Rx object focal plane 314 and the Tx object focal plane 324. In this case moving the mirror 512 has the effect of reversing the folding direction, and folding the beam back over itself.

This configuration has the immediate advantage that the first reflecting mirror in each case is one of the mirror pair 510, which can be placed far enough from the nearest object focal plane (the Tx object focal plane 324 in this case) to minimize variations due to dust as given by equation [1] and the components are readily configured to avoid "collisions" of the type described above. The fact that the two mirrors of the pair 510 have upward facing faces 516 and 518 makes them more susceptible to dust settling, but since according to equation [1] the dust is not focused at the sensor array 316, its presence has only the effect of uniformly diminishing the image intensity. Protection against dust by sealing the scan carriage (to be discussed further later in this specification) is a way of minimizing this effect.

The resolution of a digitized image obtained by scanning is determined by the number of resolution elements at the sensor plane and the magnification of the optical system. For the case of a linear CCD sensor array, the resolution **r** is determined by:

$$r = a\left(\frac{S_S}{S_O}\right) ppi \qquad [2]$$

where **a** is a measure of the CCD element density (e.g., elements per inch), $S_O$ and $S_S$ are the effective optical path distances of the object and sensor to the focusing lens, respectively. Accordingly, the resolutions available in a CCD scanner are determined by changing the optical path distances $S_O$ and $S_S$, by moving one or more elements of the optical system, as described and illustrated in the following figures.

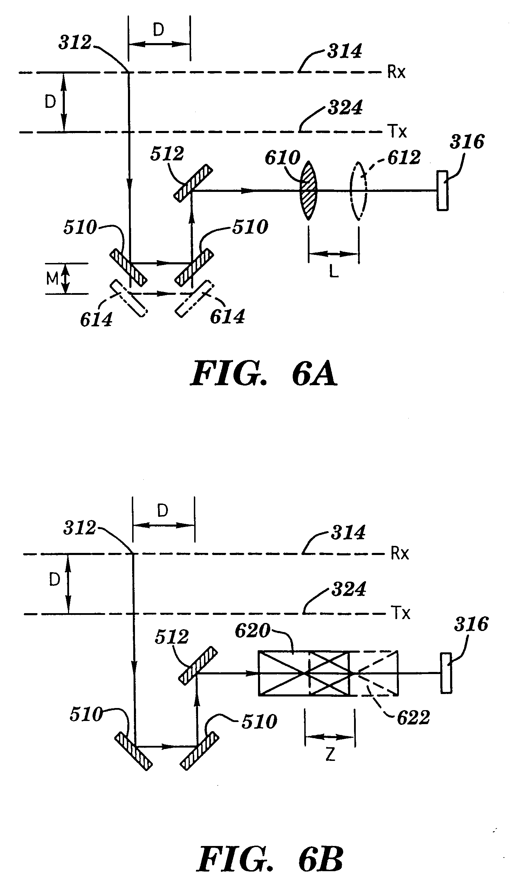

FIG. 6A illustrates resolution selection by moving a fixed focal length lens, using the optical configuration of FIG. 5A as a reference. In the drawing, lens **610** having fixed focal length **F** is moved a distance **L** to position **612**. The condition for the object at scan line **312** for the **Rx** object focal plane **314** to be focused at sensor plane **316** is given by the following well-known equation:

$$1/S_O = 1/F - 1/S_S \qquad [3]$$

As a result, one or more elements of the optical system have to move in addition to the lens **610** to satisfy the condition [3]. In the drawing, the sensor plane **316** is fixed and mirror pair **510** is moved a distance **M** to position **614**, thereby adjusting the distance $S_O$ as required. In an alternative arrangement, the position of the sensor array **316** can be moved instead of or in addition to the mirror pair **510**.

In **FIG. 6B**, a compound lens with variable focal length is used as the focusing lens. In this case, moving the lens **620** a distance **Z** to position **622** while at the same time changing its focal length can select a new magnification while ensuring satisfaction of equation [3].

Although image resolutions can be continuously variable over a range of values, they are usually selected from a fixed set specified for the scanner system, using mechanical linkages which permit continuous movement of the focusing lens or its elements and other optical elements as necessary to satisfy equation [3] at all times. The following discussion is directed to means for changing the position of a focusing lens in discrete steps corresponding to selected resolutions.

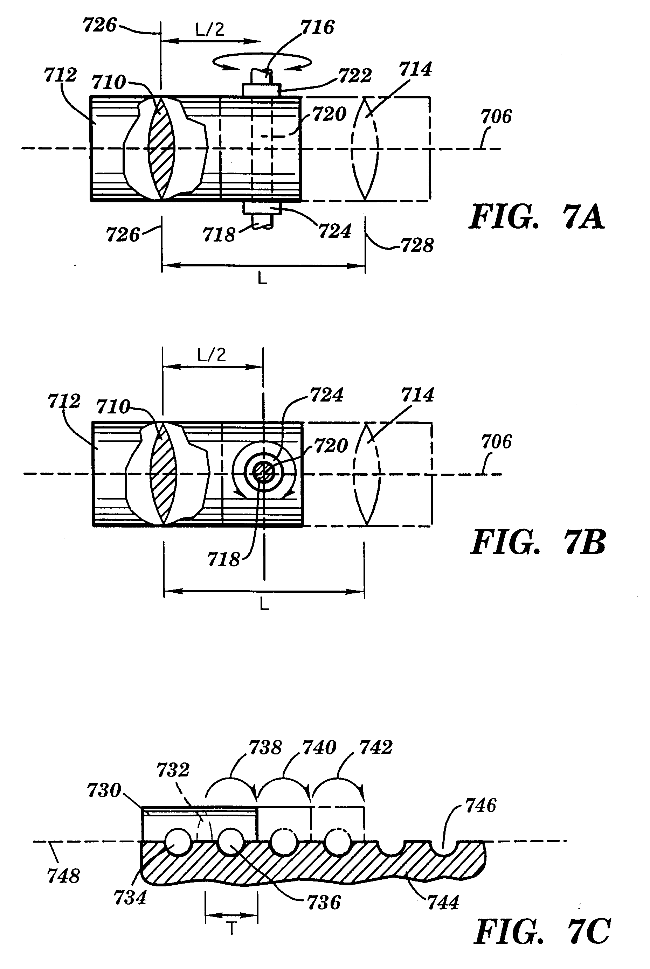

**FIG. 7A** and **FIG. 7B** illustrate an alternative to direct linear motion of a lens for positioning, wherein a lens is rotated about an axis substantially perpendicular to its optic axis. A lens **710** having an optic axis **706** is mounted in an assembly **712** configured for rotation through an angle substantially equal to 180° thereby moving lens **710** to a new position **714**. Shafts **716** and **718** coaxial with axis of rotation **720** are constrained by bearings **722** and **724**. The effective center **726** of lens **710** is offset from axis of rotation **720** by a distance **L/2**, where **L** is the distance between the original lens position **726** and the new lens position **728**.

FIG. 7C illustrates a variation of the above configuration, in which a lens assembly **730** contains a lens **732** with side shafts **734** and **736** arranged such that a succession of "tumbling" operations (**738**, **740** and **742** for example) bring the lens **732** into a new registered position along a guide **744** having indentations **746** to receive and position side shafts **734** and **736**. Each such "tumble" of the assembly moves the lens center a distance **T** along guide **744** in a direction substantially parallel to the optic axis **748** of lens **732**.

From the previous discussions it is clear that in the apparatus of the invention the selection of object focal plane can be accomplished independently of resolution selection. In most cases, however, a different set of resolutions are selected for transparencies than for reflective original documents. Accordingly, switching from reflective to transmissive mode typically combines object focal plane and resolution selection operations. Returning to one mode after having selected the other restores the operational parameters, including resolution, applicable to that mode, thereby allowing intermixing of transparencies with reflective original documents in a processing sequence with a minimum of reconfiguration operations, in accordance with the objectives of the invention.

Since illumination, optical imaging, and sensing systems are all contained in the movable scan carriage, it is desirable to arrange these components to use the physical volume as efficiently as possible in order to avoid excessive size and mass of the movable carriage. It is well known in the art that folding the beam is one means for reducing the volume occupied by the optical path. Traditional scanning systems fold the beam in a single plane, as is illustrated in the configurations of **FIG. 3A** through **FIG. 6B**. As has been indicated, one of the limitations imposed upon beam folding configurations is "collisions" of components when they are moved for object focal plane and/or resolution selection.

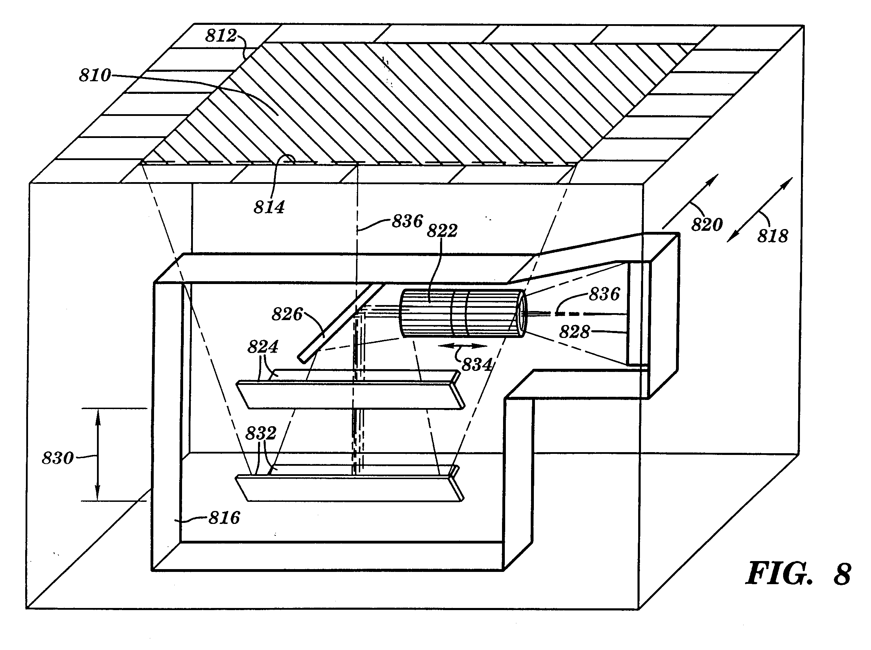

One solution to the volume-efficiency problem lies in folding the beam in three dimensions, as illustrated in **FIG. 8**, which is a perspective view of an optics and sensor sub-assembly for an embodiment of the invention. An original **810** in object focal plane **812** is scanned one scan line **814** at a time by moving a scan carriage (not shown) containing sub-assembly **816** along scanning axis **818** in direction **820**. Focusing lens **822** is used with a movable mirror pair **824** and a fixed mirror **826** to image scan line **814** on CCD array **828** mounted perpendicular to and in a plane substantially parallel to scanning axis **818**. Mirror pair **824** can be moved through focal adjustment range **830** (to the lowest position at **832**) to select the object focal plane and to compensate for movements **834** of lens **822** for resolution adjustments. The use of the fixed mirror **826** to fold the optical path **836** in a third dimension has the effect of shortening the dimension of the scan carriage sub-assembly **816** in the direction parallel to the scanning axis **818** at the expense of additional width in the direction parallel to the axis of lens **822**. The ranges of movements **830** and **834**, for movement of the mirror pair **824** and lens **822** respectively, are determined by the physical dimensions of the enclosure, the optical path and lens parameters, and position of mirror **826**.

The various embodiments of illumination system **222** of **FIG. 2A** are described in the discussion and drawings to follow. One or more tubular lamps of the fluorescent type (warm cathode or cold cathode) are disposed parallel to the scan line so as to illuminate it at the object focal plane determined by the scanning mode (reflective or transmissive) in use. The line of illumination incident at the scan line at the object focal plane is referred to herein as the "illumination axis". In typical scanner illumination configurations, a pair of lamps are disposed so as to provide simultaneous illumination from both sides of a reflective mode illumination axis and directed upward to the scan line. For transmissive originals, only a single lamp is generally required, providing illumination of an object point from above the object focal plane and substantially coincident with a transmissive mode illumination axis. Since the transparent substrate of a transmissive original document is subject to surface scratches which can be imaged at the sensor plane if illuminated by a directed beam of light, means such as reflectors and/or diffusers are used to provide illumination within an acute angle from the illumination axis so as to minimize this effect.

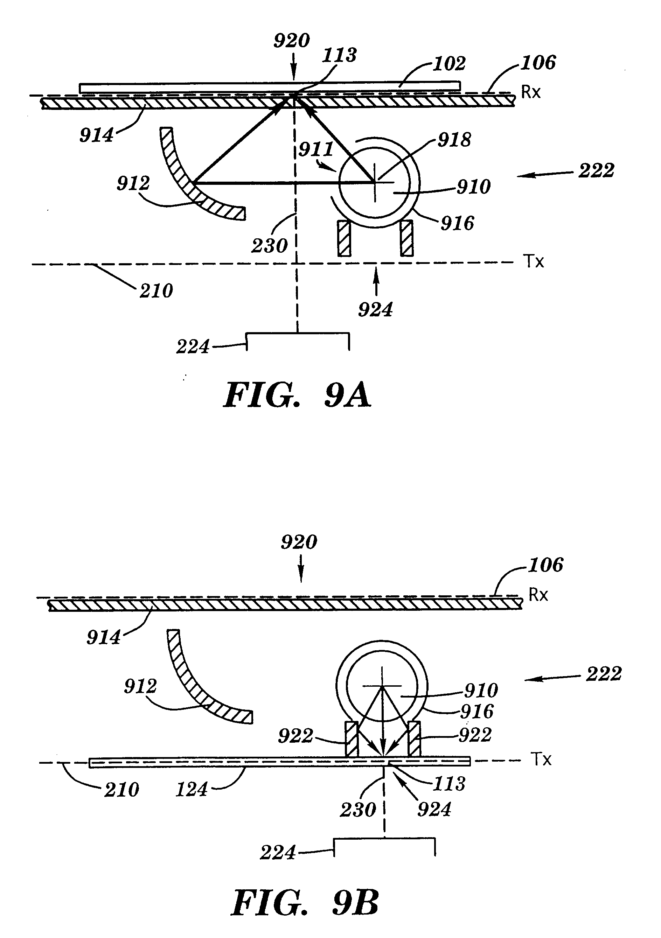

Configurations of one, two and three lamps are illustrated in the drawings of **FIG. 9A** through **FIG. 13B**. **FIG. 9A** and **FIG. 9B** show examples of illumination using a single lamp for reflective and transmissive scanning modes respectively. In **FIG. 9A**, a single lamp **910** provides direct side illumination of scan line **113** (perpendicular to page) and indirect side illumination through a fixed focusing mirror **912**. The **Rx** object focal plane **106** is the top surface of a transparent layer **914** (e.g. glass), holding the reflective original document **102** being scanned. A reflective lamp collar **916** is rotatably disposed about the axis **918** of lamp **910** such as to direct the illumination through an elongated opening **911** containing the direct and indirect illumination paths. The scan line axis **114** (not shown) of scan line **113** is substantially coincident with the illumination axis **920** (perpendicular to page) for the reflective scanning mode.

In **FIG. 9B**, reflective collar **916** has been rotated about axis **918** so as to illuminate a transparency **124** held at the **Tx** object focal plane **210** along a scan line **113** substantially perpendicular to optic axis **230**. A pair of reflectors **922** reflects the illumination from lamp **910** so as to provide for scratch suppression as described above. In this example, changing modes is accomplished by rotating reflective collar **916** to shift the reflective mode illumination axis **920** to the transmissive mode illumination axis **924** (perpendicular to page), together with motion of the illumination system **222** relative to the optical system **224** such as to shift the scan line **113** accordingly.

In the example of **FIG. 9A** and **FIG. 9B**, as well as others to follow, a rotating reflective collar **916** has been used to redirect the light for illumination mode change. Other embodiments can be used to achieve similar results. For example, an alternative to rotating reflective collar **916** rotating about fixed (clear) lamp **910** is a rotatably-disposed lamp having an elongated aperture parallel to lamp axis **918**, and having a (light-sealed) reflecting interior surface everywhere else. A second alternative comprises the use of a fixed lamp having two elongated apertures parallel to lamp axis **918** together with a rotating reflective collar **916** which selects the aperture appropriate for the illumination mode. Although the reflective collar is shown for the sake of simplicity in the following examples, it will be clear to one skilled in the art that alternatives including those described above can be used as well.

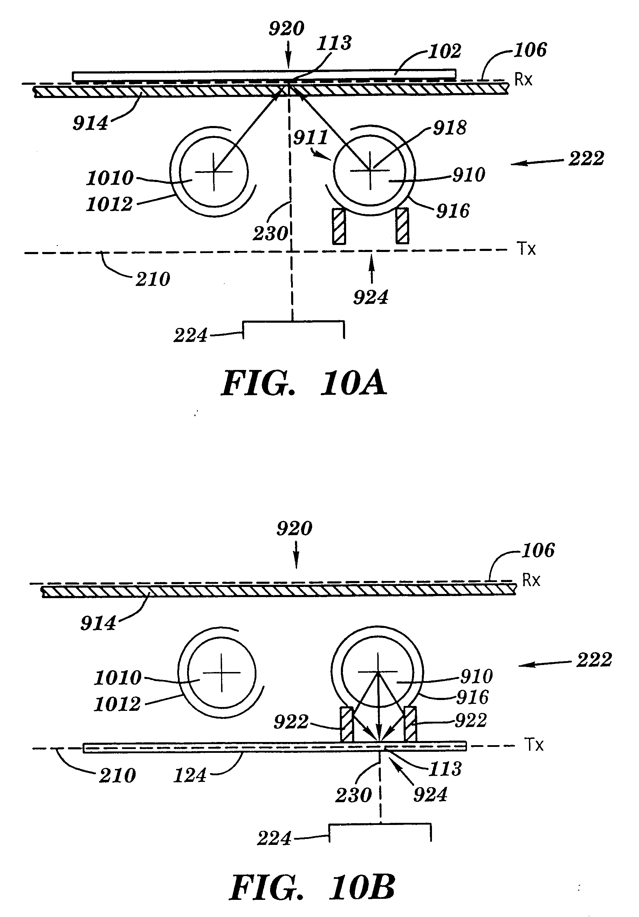

**FIG. 10A** and **FIG. 10B** show comparable embodiments using two parallel lamps instead of a single lamp and mirror. Both lamps **910** and **1010** are used for reflective mode scanning as shown in **FIG. 10A**, whereas only lamp **910** is used for transmissive mode scanning as shown in **FIG. 10B**. Again, mode change is accomplished by rotation of the reflective collar **916** and relative motion of the illumination system **222**. In this configuration, as in those of **FIG. 9A** and **FIG. 9B**, a document **102** on reflective scanning surface **914** has no effect upon scanning in transmissive scanning mode.

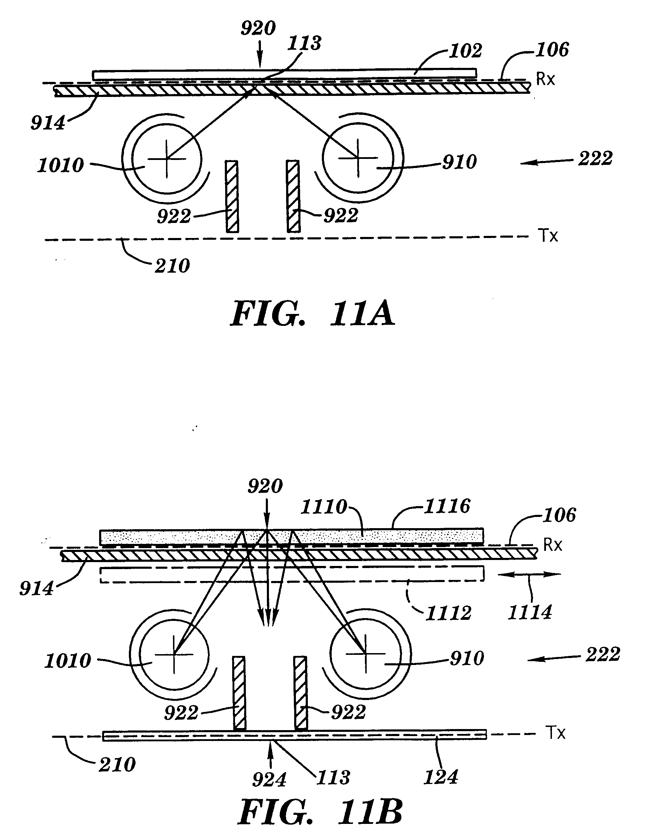

**FIG. 11A** and **FIG. 11B** illustrate the use of a substantially flat diffuser to redirect the light of a fixed pair of lamps when in transmissive scanning mode. In **FIG. 11A**, the lamps **910** and **1010** illuminate scan line **113** at illumination axis **920** in **Rx** object focal plane **106** as in the previous example. Mode change from reflective scanning mode to transmissive scanning mode is accompanied by use of a diffuser as shown in **FIG. 11B**. In the simplest case, document **102** is replaced by a high-efficiency diffusing reflector **1110**, comprising a sheet of translucent material with a reflective back surface **1116**, thereby directing the light down to scan line **113** in **Tx** plane **210**. Although no motion of the illumination system **222** takes place relative to optical system **224** of **FIG. 2A**, extra work steps are involved in replacing the document **102** with the diffuser sheet **1110**. An alternative is the use of a removably disposed diffuser reflector sheet **1112** between the transparent layer **914** and the lamps **910** and **1010**. In this case, a mode change is accompanied by insertion or removal **1114** of the diffuser reflector sheet **1112**, without the necessity of replacing a document **102** lying on reflective scanning surface **106**.

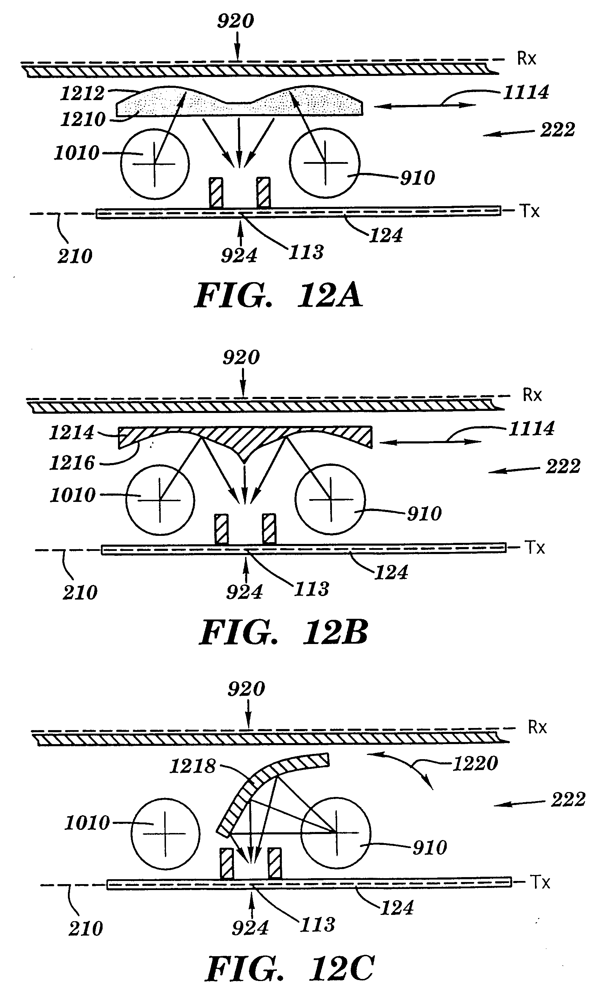

**FIG. 12A** through **FIG. 12C** show embodiments which elaborate on those of **FIG. 11B**, wherein diffusing and/or reflecting elements are inserted or withdrawn between the lamps and the reflective scanning surface to accompany a scanning mode change. In **FIG. 12A**, a diffuser reflector module **1210** having a back reflecting surface **1212** redirects the light from lamps **910** and

1010 to scan line 113 in Tx object focal plane 210. Motion 1114 of the module 1210 is used to switch modes.

FIG. 12B and FIG. 12C show variations of that described above. In FIG. 12B, a module 1214 is used, having a front reflecting surface 1216, thereby providing specularly-reflected (e.g., focused) instead of purely diffuse illumination as in the previous examples. Again, motion 1114 of the module 1214 is used to switch modes. In FIG. 12C, a single fixed lamp 1010 is used with a rotating mirror 1218 to direct illumination to scan line 113 in Tx object focal plane 210. In this embodiment, a rotation 1220 of mirror 1218 is used to change between transmissive and reflective scanning modes. In each of the embodiments illustrated in FIGS. 12A-12C, a mode change from transmissive to reflective scanning shifts the illumination axis from the transmissive mode illumination axis 924 to the reflective mode illumination axis 920 (and vice-versa).

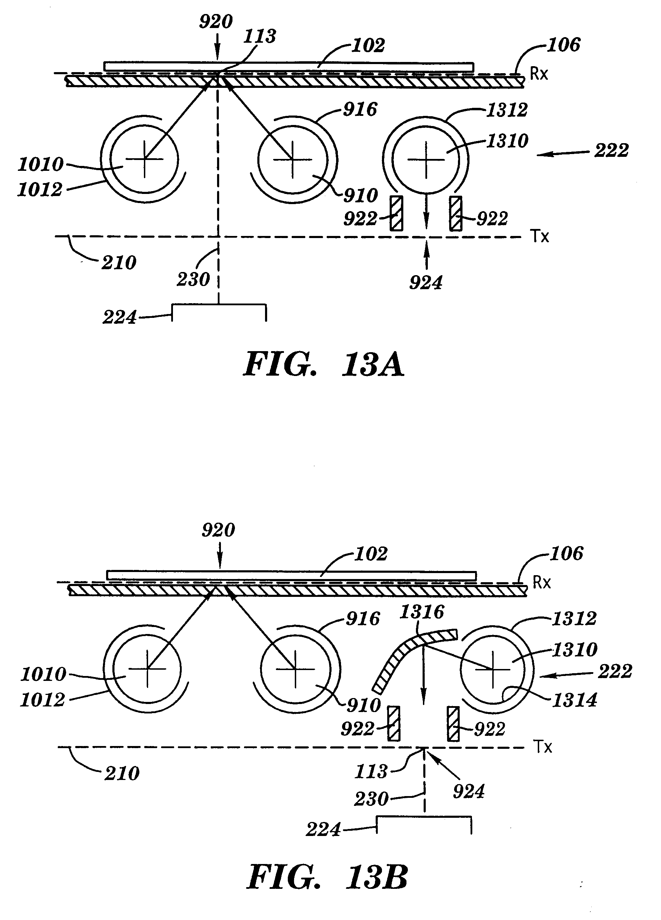

FIG. 13A and FIG. 13B show two configurations of three lamps, with two dedicated to reflective scanning and one to transmissive scanning. These configurations have the advantage that lamps associated with each scanning mode wear uniformly without requiring lamps dedicated to the mode not in use to be lit. In FIG. 13A, lamps 910 and 1010 are used for reflective scanning, and lamp 1310 for transmissive scanning. Since the illumination axes of the lamp systems are not coincident, the illumination system 222 is moved relative to the optical system 224, as in examples of FIG. 9A through FIG. 10B discussed above. In this example, the transmissive mode lamp 1310 is disposed using reflecting collar 1312 to direct diffuse illumination downward, using reflectors 922 for scratch suppression as discussed previously.

In FIG. 13B, an alternative configuration is shown, wherein the transmissive mode lamp 1310 is disposed with reflecting collar 1312 so as to direct illumination other than downward, e.g., substantially horizontally as shown in the drawing, using a reflecting mirror 1316 to redirect the light toward the Tx object focal plane 210. This configuration eliminates localized variations in illumination along the lamp due to settling of particulate matter along its lower inside surface 1314 as the lamp ages. It is to be noted that alternative configurations of mirrors and/or lenses can also be used for the redirection of light.

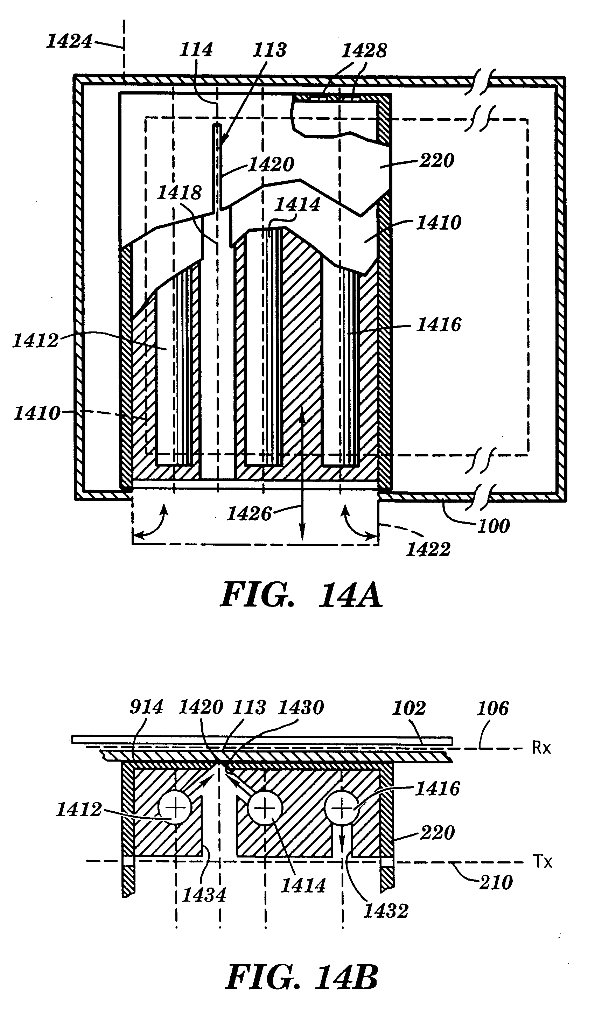

FIG. 14A and FIG. 14B show top and side views of an embodiment of an illumination system comprising three dedicated lamps fixed within a removable lamp module. This configuration has the advantage of ease of replacement, automatic alignment of the illumination components, and uniformity of wear as described above.

The drawings show a scanner 100 with movable scan carriage 220 positioned for module interchange. For the purposes of this discussion, one of the two extreme limits 1424 of carriage travel, hereinafter referred to as the "scan carriage home position", is assumed. Removable module 1410 is disposed within scan carriage 220 for precise positioning of the three lamps 1412, 1414 and 1416. Access to module 1410 is provided by an opening in the scanner case having a flip-down cover 1422, allowing insertion or removal of the module (shown by arrow 1426). Keyed electrical contacts 1428 assure proper registration of the lamps and power connections for their operation.

Prepositioning of the lamps 1412, 1414, and 1416 in manufacture of the module 1410 assures accuracy of optical alignment and minimum contamination due to handling. Openings and surfaces are designed for maximum capture of light with minimum accompanying flare from unwanted reflected light, using reflective surfaces 1430 and 1432 for direction of light, and absorptive surface 1434 to minimize flare in reflective scanning mode.

The reflective original document 102 is imaged at scan line 113 along scan line axis 114 through transparent layer 914 and through an elongated opening 1420 in the top of scan carriage 220. The opening 1420 is the aperture which defines the object area actually imaged on the sensor corresponding to a given scan line. The elongated opening 1418 in the illumination module 1410 is substantially coincident with but substantially wider than the opening 1420, to assure that critical alignment of the scan line axis 114 is determined by the scan carriage 220 and not by minor variations in the positioning of the removably-disposed illumination module 1410.

As has been stated previously, an object of the invention is the ability to change easily from reflective to transmissive scanning modes, and vice versa. Accordingly, the embodiments of the invention described herein and illustrated in the following drawings are directed to the use of the one essential prescan procedure in any scanning operation: the preparation and handling of original documents, as a means for switching scanning modes.

In these embodiments, an original document to be scanned in reflective scanning is placed face down on a transparent surface, as has been described above. Aids to alignment of reflective media are provided, to be described later in this specification. Transparencies are prepared outside of the scanner using a transmissive media holder, hereinafter referred to as a "Tx slide holder", which assures rectilinear alignment of the original document within the holder, and proper registration of the surface to be scanned when the holder is placed within the scanner unit. Since the Tx slide holder can be supported accurately within the scanner, the use of one or more glass surfaces for support and registration of a transparent original document is unnecessary. As a result, image artifacts due to flare, Newton's rings and surface contamination are eliminated, along with extra time in original document preparation needed to overcome these problems.

Insertion of the Tx slide holder into the scanner can be used to activate the mechanical, optical, and electronic changes accompanying the mode change from reflective scanning mode to transmissive scanning mode, and removal of the **Tx** slide holder restores those of the reflective mode. Embodiments which carry out these functions involve changes to the illumination system **222** of **FIG. 2A**, or one or more components of the optical system **224** detailed in the preceding sections.

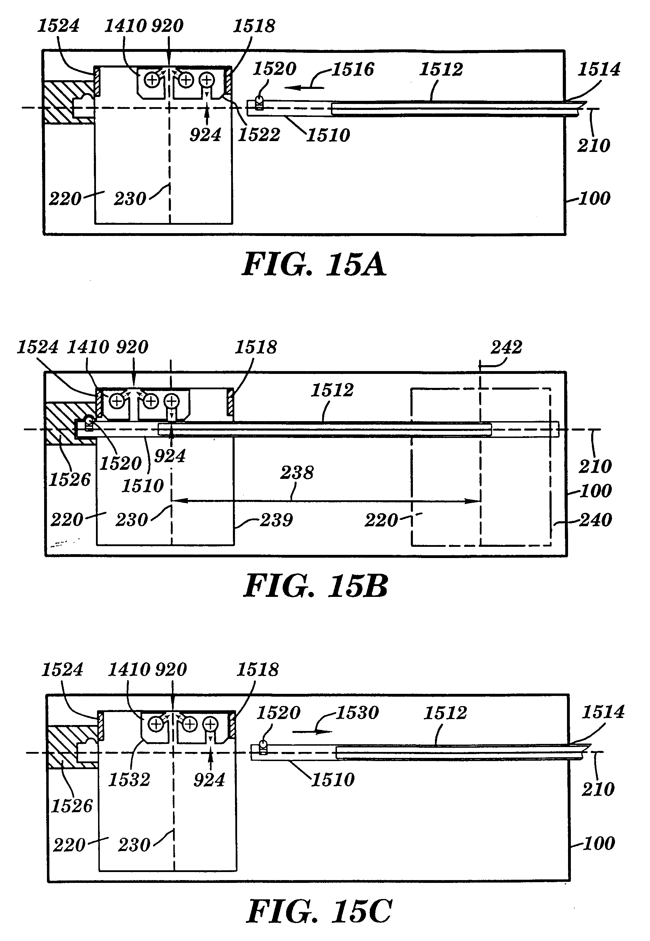

**FIG. 15A**, **FIG. 15B** and **FIG. 15C** illustrate the use of a **Tx** slide holder to change the illumination mode. In this example, the three-lamp removable cartridge of **FIG. 14** is movably disposed within the scan carriage, so as to position either the single transmissive-mode lamp or the pair of reflective-mode lamps in correct alignment with the optical system depending upon whether the **Tx** slide holder is inserted or not, respectively.

In **FIG. 15A**, a **Tx** slide holder **1510** including transparent original document **1512** is inserted through an opening **1514** in the case of scanner **100**, and moved by motion **1516** (manually and/or automatically) into position using guides (not shown) substantially parallel to **Tx** object focal plane **210**. Scan carriage **220** having optic axis **230** is shown in an initial position with movably disposed illumination module **1410** in reflective scan illumination mode, i.e., with illumination axis **920** aligned with optic axis **230**. In the example, the module **1410** is held in position by a magnet **1518**. As the **Tx** slide holder **1510** is moved, a ball plunger **1520** engages surface **1522** of module **1410**, pushing it into the position shown in **FIG. 15B**, wherein illumination axis **924** is aligned with optic axis **230** and module **1410** is held in position by magnet **1524**. At the end of the insertion motion **1516** of **Tx** slide holder **1510**, the ball plunger **1520** engages an indent in end dock **1526**, firmly seating **Tx** slide holder **1510** and holding transparent original document **1512** in proper registration and alignment for scanning.

During a scan operation, scan carriage **220** is moved from initial position **239** to end of scan position **240**, thereby moving optic axis **230** to position **242** along path **238**, so as to scan original document **1512** from one end to the other. After scanning, the scan carriage **220** is returned to its initial position **239** with no change in relative position of illumination module **1410**. In **FIG. 15C**, **Tx** slide holder **1510** is removed, reversing the insertion process by motion **1530** of the holder **1510**. Again, ball plunger **1520** engages illumination module **1410**, this time along surface **1532**, thereby moving module **1410** to reflective mode position with illumination axis **920** aligned with optic axis **230**, and with module **1410** again held in place by magnet **1518**.

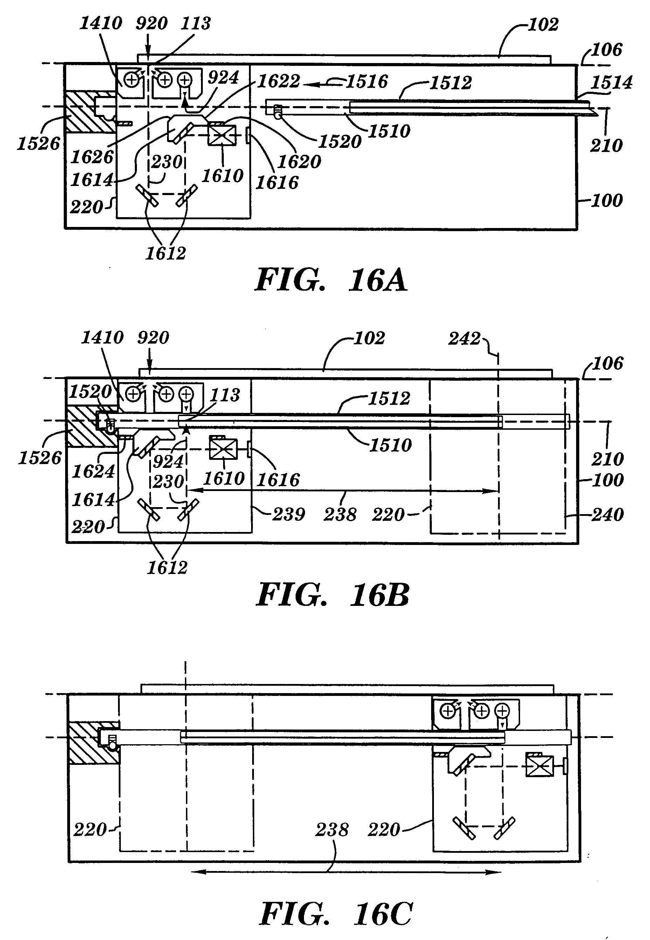

In **FIG. 16A**, **FIG. 16B** and **FIG. 16C**, the illumination system remains fixed, and the insertion of the **Tx** slide holder causes reconfiguration of the optical system for transmissive scanning mode. **FIG. 16A** shows a scan carriage **220** with the optical system configured for reflective scanning. Fixed illumination module **1410** provides illumination along illumination axis **920** permitting scanning of original document **102** placed original side down at **Rx** object focal plane **106**. Lens **1610** is used with fixed mirror pair **1612** and movable mirror **1614** to image scan line **113** on sensor array **1616**. Movable mirror **1614** is held in position by magnet **1620**.

Insertion of **Tx** slide holder **1510** through opening **1514** in the case of scanner **100** moves holder **1510** with transparent original document **1512** into position by motion **1516** as in the previous example. Ball plunger **1520** engages surface **1622** of movable mirror **1614** moving it into position for transmissive mode scanning as shown in **FIG. 16B**, wherein it is held in position by magnet **1624**. As in the previous example, the **Tx** slide holder **1510** is firmly seated in end dock **1526** using ball plunger **1520**. In this configuration, a scan line **113** of transparent original document **1512** is illuminated along transmissive illumination axis **924**, and imaged by lens **1610** on sensor array **1616**. Scanning of the original document **1512** is completed as scan carriage **220** is moved from initial position **239** to end of scan position **240**, moving optic axis **230** to position **242** by motion **238**. The end of scan position is shown in **FIG. 16C**.

As in the previous example, removal of the **Tx** slide holder **1510** reverses the sequence of **FIG. 16A**, with ball plunger **1520** engaging surface **1626** of movable mirror **1616** and restoring it to the correct position for reflective scanning.

The examples shown above illustrate specific examples of mode-change operations actuated by insertion or removal of a **Tx** slide holder. It will be apparent to one skilled in the art that many variations exist for reconfiguration of illumination and optical components, singly or in combination.

The ability to protect the optical system of a scanner by enclosing it physically and optically has a major effect upon data quality and maintenance requirements. As has been discussed previously, dust settling upon optical surfaces such as mirrors, lenses or CCD array elements can provide contamination of the digitized signal as well as loss of sensitivity. Typical artifacts in the data include streaking along the scanning axis. Embodiments which minimize these effects have been described, for example in **FIG. 5A** and **FIG. 5B** wherein upward-facing mirror elements are kept at sufficient distance from an object focal plane to avoid imaging dust particles. Other provisions, such as vertically disposed lens and CCD surfaces as shown in **FIG. 8**, are helpful in minimizing dust settling effects, but cannot entirely eliminate them as long as air movement exists within the scan carriage.

A second problem occurs as a result of light which is scattered from optical and other surfaces within the scan carriage, raising the background noise level in the captured data and introducing unwanted artifacts in the digitized image. This "flare" arises from ambient light which enters the scan carriage as well as from light coming from the illumination system by other than the path of a correctly imaged object point. Flare is minimized but not eliminated in the embodiments of the optical system described previously, by reducing the number of medium transitions within the optical path, e.g., glass windows within which multiple reflections can occur, use of optical anti-reflection coating for lenses and CCD window glass, etc.

A third problem occurs during dark current calibration of the CCD sensor system, as a result of stray light entering the system from ambient sources. Since the major source of such light is from the scanner illumination system, this problem can be minimized by shutting the lamps off during the calibration procedure. Cycling the lamps off and on again causes stress on the lamps, thereby shortening their lifetime, and requires a stabilization period before resumption of scanning operations in order to avoid image quality degradation. The combined effect of this and the previously described problems is reduction in overall productivity of the scanning system.

The above problems are addressed in the invention by enclosing the optical system components of the movable scan carriage in a light-sealed enclosure, protected by a "dark slide" movably disposed relative to the scan carriage such that there are no physical or optical openings in the enclosure except during an actual scan. Accordingly, there is minimal movement of air and reduced exposure of surfaces to dust during shipping, idle times, when originals are inserted into the scanner, and when the unit is opened for service. The dark slide also eliminates noise in the CCD signal due to ambient stray light, without the necessity of cycling the lamps off and on during dark current calibration.

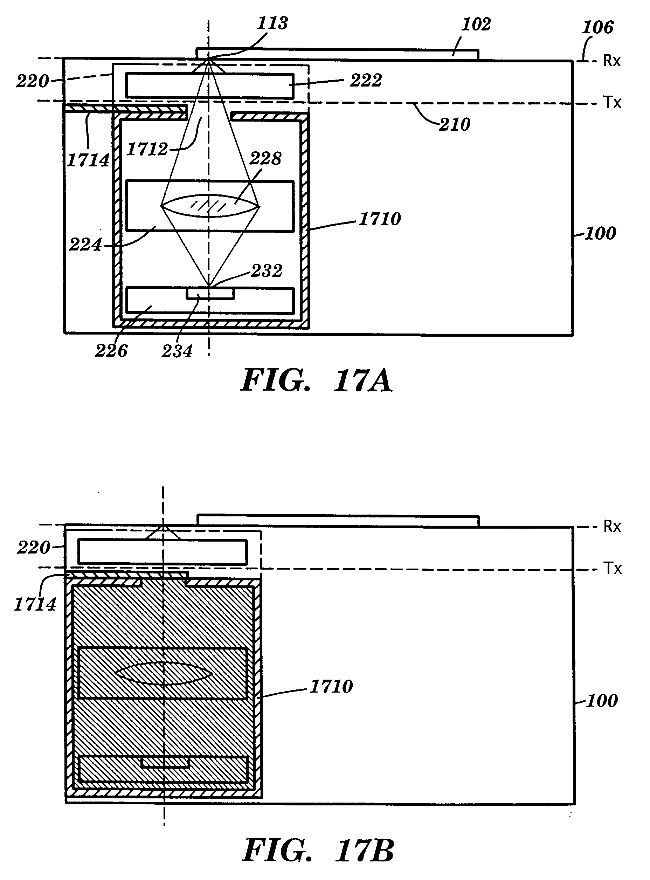

FIG. 17A and FIG. 17B illustrate the use of a stationary dark slide which seals the optical enclosure when the scan carriage is idle or in dark current calibration mode. In FIG. 17A, the movable scan carriage 220 of FIG. 2A is shown in reflective scanning mode, with illumination system 222 illuminating scan line 113 of a reflective original document 106, imaged by optical system 224 containing lens 228 on sensor system 226 containing sensor array 234. The scan carriage 220 is physically and optically sealed by enclosure 1710 except at an aperture 1712 of width sufficient to capture fully the illuminated scan line 113. A stationary dark slide 1714 is fixed to the case of scanner 100 so as to be clear of the opening 1712 during scanning. In FIG. 17B, the scan carriage 220 has been moved to the home position for dust protection or dark current calibration. In this position, the stationary dark slide 1714 completely covers opening 1712 in sealed enclosure 1710, thereby excluding dust and light.

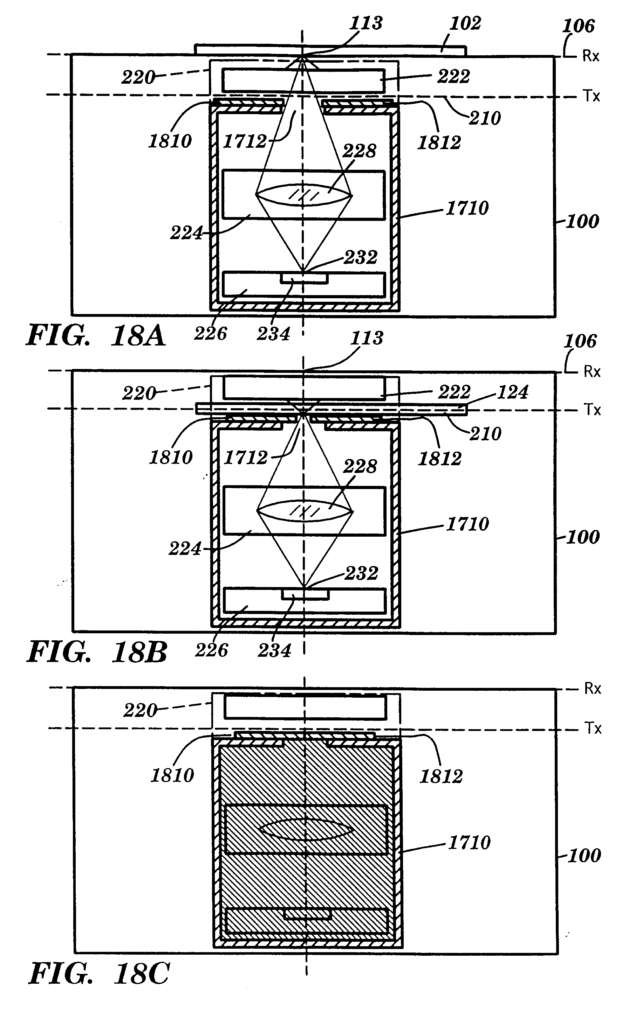

An alternative to the stationary dark slide of FIG. 17A and FIG. 17B is an aperture shutter comprised of a plurality of dark slides movably fixed to and moving with the scan carriage, as shown in FIG. 18A, FIG. 18B and FIG. 18C. This embodiment provides not only for sealing the enclosure completely when idle or in dark current calibration mode, but also for changes in aperture width and/or length according to scanning mode, thereby minimizing flare effects during scanning.

In FIG. 18A, the system is being used in reflective scanning mode. Scan carriage 220 is fitted with a sealed enclosure 1710 having fixed aperture 1712 as in the previous example. The scan carriage 220 is additionally fitted with a pair of movably disposed slides 1810 and 1812, forming a shutter which can be operated by a motor and/or other linkages as appropriate. In reflective scanning mode, the shutter is opened to the maximum extent, providing an opening substantially equal to the aperture 1712 of the enclosure 1710.

FIG. 18B shows the same system configured for transmissive scanning mode. In this case, the movably disposed slides 1810 and 1812 are moved closer together, providing an opening substantially equal to that defining a scan line 113 at the Tx object focal plane 210. Since the shutter aperture is reduced to the minimum size used for transmissive scanning mode, flare is minimized, along with dust entry.

In the idle/dark current calibration mode, shown in FIG. 18C, the pair of slides 1810 and 1812 are moved together, thereby closing the shutter completely and sealing the enclosure 1710 against light and dust. Of course, it should be noted that the slides 1810 and 1812 and/or other slide configurations may also be utilized to adjustably define the width of the scan line without departing from the scope of the present invention.

An important factor in the quality of a digitized representation of an original scanned by a scanner system is the uniformity and precision of the linear drive system used for the relative motion of the scan line of the scanned original along the original document in the direction of the scanning axis. Small variations in the motion result in wobbling or tilting of the scan line axis, showing up as bands and streaks in the digitized data. In the apparatus of the invention, the illumination system, optical system, and sensor system are moved together as a unit within the movable scan carriage. Accordingly, wobbles around an axis substantially perpendicular to the scanning axis effectively "twist" the scan line axis with respect to a scanned original, while tilting around an axis substantially parallel to either the scan line axis or scanning axis can cause variations in illumination from one scan line to the next, which appear as bands in the digitized image.

In addition to uniformity of the linear drive system, it is necessary to index the position of the scan line with precision, using a position encoding system accurate to a resolution element or better. Embodiments of the invention addressing these requirements are discussed in the following discussion and accompanying drawings.

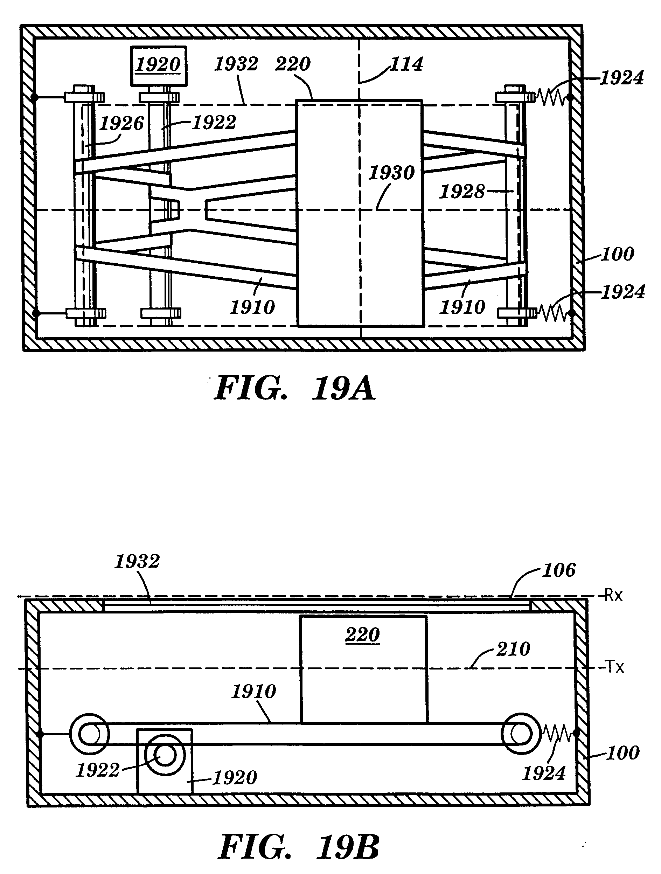

FIG. 19A and FIG. 19B show top and side views of a linear drive system offering uniformity and positioning precision, wherein the scan carriage is carried by a flexible drive member comprised of helically-wound bands disposed end-to-end, and frictionally coupled to a drive motor. In this configuration, scan carriage 220 is driven by motion of band 1910 under control of drive motor 1920. The band 1910 is helically wound around drive shaft 1922 and held in tension by springs 1924. Shafts 1926 and 1928 are used as direction-changing rollers. Rotary motion of shaft 1922 is converted into linear motion of the band 1910, and motion of scan carriage 220 along scanning axis 1930, within limits determined by the positions of shafts **1926** and **1928**. This linear motion provides for complete scanning of an original document along scanning axis **1930** within the limits of window **1932**.

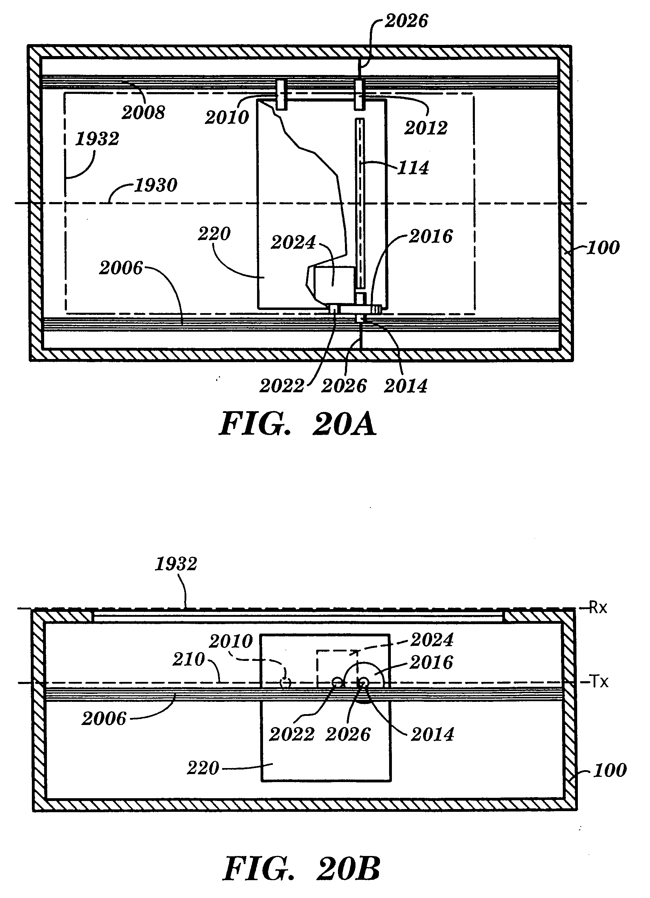

An alternate linear drive system embodiment is shown in **FIG. 20A** and **FIG. 20B**, wherein the scan carriage is supported along one or more axes substantially coincident with the **Tx** object focal plane **210**. This configuration provides an effective center of rotation designed to coincide with the scan line in the object focal plane most sensitive to tilting effects described above. In the drawings, scan carriage **220** is supported at three points along rails **2006** and **2008**, using passive rotating shafts **2010**, **2012** and a driven shaft **2014**. A friction wheel **2016**, attached to driven shaft **2014**, is driven by the drive shaft **2022** of a motor **2024**. As a result of this configuration, the center of rotation due to variations in the drive speed of motor **2024** is along a rotation axis **2026** which is substantially parallel to scan line axis **114** and substantially coincident with the **Tx** object focal plane **210**. The scan carriage **220** can be driven between limits determined by the physical dimensions of the scan carriage **220** and the enclosure of the scanner **100** to scan an original document along scanning axis **1930** within the limits of window **1932**.

A variety of motor and encoding configurations can be used in the drive system of the invention, including stepper motors and torque motors with shaft or linear-position encoders. A stepper motor provides precision in position indexing without complexity, while using a greater amount of time for "slew" motions of the scan carriage, i.e., when returning the carriage to home position at the end of a scan. A torque motor, on the other hand, provides for a wide range of driving rates, but requires an encoder and feedback system to ensure positional accuracy. A shaft encoder coupled to the drive motor, or a linear encoder contained on the scan carriage itself can be used for this function.

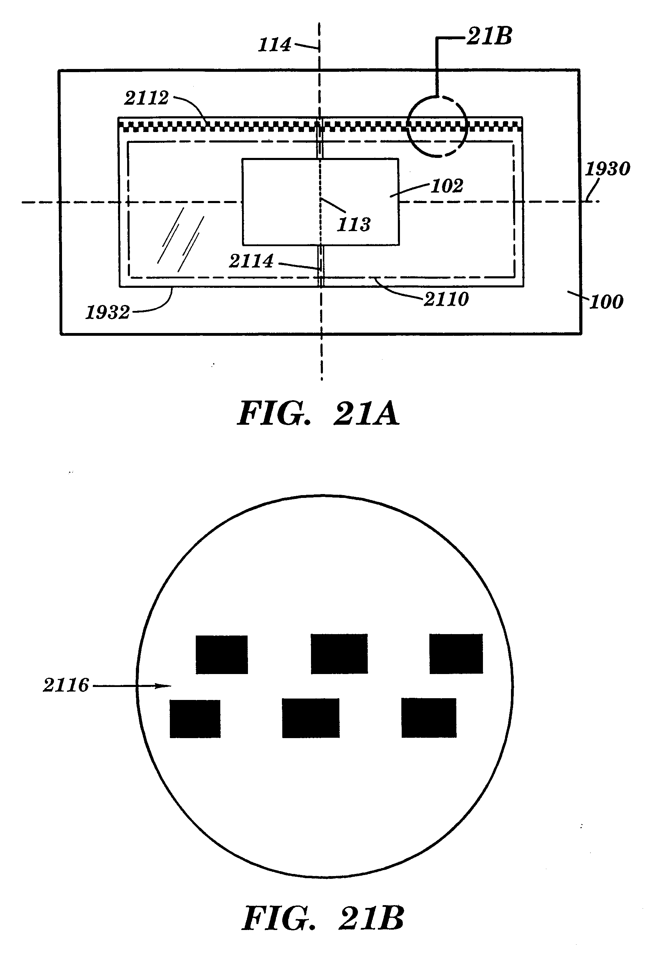

An implementation of a linear position encoder using a linear CCD array (i.e., the linear sensor array **234** shown in **FIG. 2A** and **FIG. 2B**) is illustrated in **FIGS. 21A** and **21B**. In this configuration, a number of elements of the linear CCD array outside an active imaging area of the scan line **113** are dedicated to position encoding. Transparent surface **1932** is comprised of active imaging area **2110** and linear encoder **2112** such that the scanning area **2114** imaged on the linear CCD array includes an image of a scan line **113** of an original document **102** and an image of the linear encoder **2112** along scan line axis **114**. As shown in exploded view in **FIG. 21B**, the linear encoder **2112** can for example be a linear 50% duty-cycle black/white pattern in 90° quadrature **2116**, having a spatial frequency enabling exact position readout to within a resolution element of the digitized representation of a scanned original. The image of the linear encoder **2112**, once captured by the designated elements of the linear CCD array, can be suitably decoded according to known decoding methods to provide accurate positional information during scanning.

One of the more time-consuming activities in production scanning is positioning of media to be scanned for correct registration and alignment. Even small alignment errors can cause angular displacement with respect to the orthogonal coordinate system defined by the scan line axis and scanning axis. These errors must be corrected by multiple scanning iterations, or later in data processing software. In either case, greater user interaction and loss of overall productivity are the result. The problem is more acute for reflective original documents than for transparencies since the former are opaque, placed original side down on the transparent surface at the **Rx** object focal plane, and scanned at a lower resolution (and therefore more likely to introduce visible "steps" in straight lines in the digitized image resulting from slight angular displacement). Transparencies, on the other hand, are held in place by features of the **Tx** slide holder, which can be configured for a particular slide size and fitted with registration aids. Finally, since transparencies can be prepared outside the scanner at a setup workstation, the scanner does not have to be idle while setup takes place, as is the case for preparing reflective media.

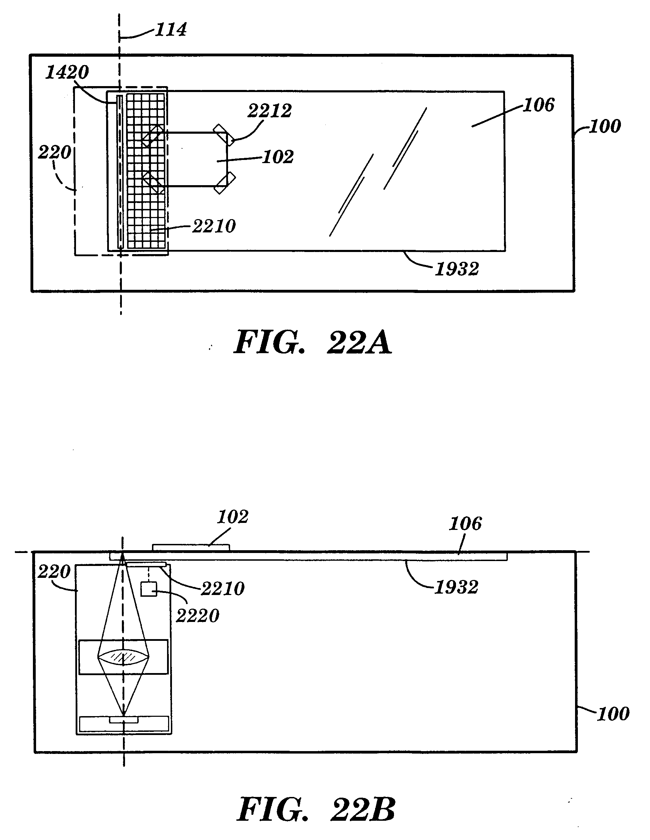

**FIG. 22A** and **FIG. 22B** show top and side views of an alignment tool built into the scanner according to an embodiment of the invention, directly referencing the scan line axis and scanning axis, and visible to the user during the preparation of reflective media for scanning. Since the alignment grid is in permanent registration with the optical coordinate system, visual alignment to the grid can be quickly carried out with a higher degree of accuracy.

In the example shown, an original document **102** to be scanned in reflective scanning mode is placed original side down on transparent surface **106** within active scanning area **1932**. An alignment grid **2210** is provided on the top surface of the scan carriage **220** in accurate registration with scan line axis **114**. The original document **102** is aligned to the alignment grid **2210** and fixed in place, using for example, removable tape **2212**. Since the scan carriage **220** can be moved to any location within the active scanning area **1932**, the alignment grid **2210** is available everywhere for the alignment of the original. In an alternate embodiment, the grid pattern **2210** is illuminated from below using an illumination source **2220** such that the grid pattern **2210** is visible through the substrate of original document **102**. In this case, even with photographic prints, the original to be scanned can itself be aligned to the grid pattern **2210** rather than only the edges of the original document **102**.

The foregoing description of the present invention has been presented for purposes of illustration and description. It is not intended to be exhaustive or to limit the invention to the precise form disclosed, and obviously many modifications and variations are possible in light of the above teaching. Such modifications and variations that may be apparent to a person skilled in the art are intended to be included within the scope of this invention as defined by the accompanying claims.

**Claims**

1. A scanning system for scanning an original document to obtain a digital representation of said original document, comprising:

(A) An object focal plane including a position encoder and an active imaging area on which said original document is positioned for scanning, said position encoder extending along substantially an entire length of said active imaging area along a scanning axis;

(B) A scan carriage movably disposed for linear motion along said scanning axis, said scan carriage including means for illuminating a scan line on said object focal plane, said scan line extending across said position encoder and said active imaging area substantially perpendicular to said scanning axis, said scan carriage further including means for obtaining a digitized representation of said scan line, said digitized representation of said scan line including a first portion corresponding to said original document located in said active imaging area, and a second portion corresponding to said position encoder;

(C) Means for displacing said scan carriage along said scanning axis to obtain digitized representations of successive scan lines, wherein the first portions of the digitized representations of said successive scan lines collectively form the digital representation of said original document; and,

(D) Position determining means for determining a scanning position of said scan carriage, using the second portion of the digitized representation of at least one of said successive scan lines, as said scan carriage is displaced along said object focal plane by said displacing means.

2. A scanning system according to claim 1 wherein said position encoder includes a linear encoder.

3. A scanning system according to claim 1 wherein said means for obtaining a digitized representation of said scan line includes a linear CCD array having a plurality of light-sensitive elements.

4. A scanning system according to claim 3 wherein a predetermined number of light-sensitive elements of said linear CCD array are used to obtain the second portion of the digitized representation of said scan line corresponding to said position encoder.

**FIG. 1A**
**PRIOR ART**

**FIG. 1B**
**PRIOR ART**

**FIG. 2A**

**FIG. 2B**

**FIG. 3A**

**FIG. 3B**

FIG. 4A

FIG. 4B

**FIG. 5A**

**FIG. 5B**

*312*        D

— *314* — Rx

D

— *324* — Tx

*512*     *610*     *612*     *316*

*510*     *510*

L

M

*614*     *614*

## FIG. 6A

*312*     D

— *314* — Rx

D

— *324* — Tx

*512*     *620*     *316*

*510*     *510*     *622*

Z

## FIG. 6B

## FIG. 7A

## FIG. 7B

## FIG. 7C

FIG. 8

EP 0 751 666 A2

FIG. 9A

FIG. 9B

FIG. 10A

FIG. 10B

EP 0 751 666 A2

FIG. 11A

FIG. 11B

23

920
Rx
1212
1210
1114
222
1010
910
924 113
124
210

## FIG. 12A

920
Rx
1214
1216
1114
1010
222
910
924 113
124
210

## FIG. 12B

920
Rx
1218
1220
1010
222
910
924 113
124
210

## FIG. 12C

**FIG. 13A**

**FIG. 13B**

*FIG. 14A*

*FIG. 14B*

26

**FIG. 15A**

**FIG. 15B**

**FIG. 15C**

FIG. 16A

FIG. 16B

FIG. 16C

FIG. 17A

FIG. 17B

**FIG. 18A**

**FIG. 18B**

**FIG. 18C**

**FIG. 19A**

**FIG. 19B**

FIG. 20A

FIG. 20B

## FIG. 21A

## FIG. 21B

FIG. 22A

FIG. 22B